# EUROPEAN PATENT SPECIFICATION

(11) **EP 2 779 850 B1**
(45) Date of publication and mention of the grant of the patent: **29.09.2021**
(21) Application number: 12794607.7
(22) Date of filing: 15.11.2012
(51) Int. Cl.: A24B 15/30, A24B 13/00

(54) **SMOKELESS TOBACCO PRODUCTS WITH STARCH COMPONENT**
RAUCHLOSE TABAKPRODUKTE MIT STÄRKEMITTEL
PRODUITS DU TABAC SANS FUMÉE AYANT UN COMPOSANT AMIDON

(30) Priority: 16.11.2011 US 201113297398
(43) Date of publication of application: 24.09.2014
(73) Proprietor: R. J. Reynolds Tobacco Company, Winston-Salem, NC 27101 (US)
(72) Inventor: JACKSON, Thaddeus J., High Point, North Carolina 27265 (US); JOYCE, Leigh Ann Blevins, Lewisville, North Carolina 27023 (US); MUA, John Paul, Advance, North Carolina 27006 (US); BEARD, Kenneth Allen, Lexington, North Carolina 27295 (US); SCHLUTER, Rodney D., Clemmons, North Carolina 27012 (US)
(74) Representative: Hoeger, Stellrecht & Partner Patentanwälte mbB
(86) International application number: PCT/US2012/065207
(87) International publication number: WO 2013/074742

(56) References cited:
- US-A1- 2006 191 548
- US-A1- 2009 293 889
- US-A1- 2010 291 245
- US-A1- 2011 220 130
- Anonymous: "Product Data Sheet : TEXTAID-A", NATIONAL STARCH & CHEMICAL , 5 February 2001 (2001-02-05), pages 1-5, XP002695660, Retrieved from the Internet: URL:http://www.foodinnovation.com/_layouts /ns_prod/DBDocuments.aspx?DocumentId=250 [retrieved on 2013-04-18]
- None

## Description

### FIELD OF THE DISCLOSURE

The present disclosure relates to products made or derived from tobacco, or that otherwise incorporate tobacco, and are intended for human consumption. In particular, the disclosure relates to compositions or formulations incorporating tobacco, and that are intended to be employed in a smokeless form.

### BACKGROUND OF THE DISCLOSURE

Cigarettes, cigars, and pipes are popular smoking articles that employ tobacco in various forms. Such smoking articles are employed by heating or burning tobacco to generate aerosol (e.g., smoke) that may be inhaled by the smoker. Tobacco may also be enjoyed in a so-called "smokeless" form. Particularly popular smokeless tobacco products are employed by inserting some form of processed tobacco or tobacco-containing formulation into the mouth of the user. See for example, the types of smokeless tobacco formulations, ingredients, and processing methodologies set forth in US Pat. Nos. 1,376,586 to Schwartz; 3,696,917 to Levi; 4,513,756 to Pittman et al.; 4,528,993 to Sensabaugh, Jr. et al.; 4,624,269 to Story et al.; 4,991,599 to Tibbetts; 4,987,907 to Townsend; 5,092,352 to Sprinkle, III et al.; 5,387,416 to White et al.; 6,668,839 to Williams; 6,834,654 to Williams; 6,953,040 to Atchley et al.; 7,032,601 to Atchley et al.; and 7,694,686 to Atchley et al.; US Pat. Pub. Nos. 2004/0020503 to Williams; 2005/0115580 to Quinter et al.; 2005/0244521 to Strickland et al.; 2006/0191548 to Strickland et al.; 2007/0062549 to Holton, Jr. et al.; 2007/0186941 to Holton, Jr. et al.; 2007/0186942 to Strickland et al.; 2008/0029110 to Dube et al.; 2008/0029116 to Robinson et al.; 2008/0029117 to Mua et al.; 2008/0173317 to Robinson et al.; 2008/0196730 to Engstrom et al.; 2008/0209586 to Neilsen et al.; 2008/0305216 to Crawford et al.; 2009/0065013 to Essen et al.; 2009/0293889 to Kumar et al.; 2011/0139164 to Mua et al.; and 2010/0291245 to Gao et al.; PCT WO 04/095959 to Arnarp et al.; and WO 2010/132444 A2 to Atchley.
Exemplary smokeless tobacco products that have been marketed include those referred to as CAMEL Snus, CAMEL Orbs, CAMEL Strips and CAMEL Sticks by R. J. Reynolds Tobacco Company; GRIZZLY moist tobacco, KODIAK moist tobacco, LEVI GARRETT loose tobacco and TAYLOR'S PRIDE loose tobacco by American Snuff Company, LLC; KAYAK moist snuff and CHATTANOOGA CHEW chewing tobacco by Swisher International, Inc.; REDMAN chewing tobacco by Pinkerton Tobacco Co. LP; COPENHAGEN moist tobacco, COPENHAGEN Pouches, SKOAL Bandits, SKOAL Pouches, RED SEAL long cut and REVEL Mint Tobacco Packs by U.S. Smokeless Tobacco Company; and MARLBORO Snus and Taboka by Philip Morris USA.

US 2010/291245 A1 discloses a soft chewable and orally dissolvable and/or disintegrable product including a biopolymer-sugar based matrix and botanical powder dispersed throughout the biopolymer-sugar based matrix. The biopolymer-sugar based matrix includes at least one biopolymer, at least one sugar and optional additives.

It would be desirable to provide an enjoyable form of a tobacco product, such as a smokeless tobacco product, that could be provided in a variety of textures. More particularly, it would be desirable to provide methods and compositions incorporating tobacco wherein mouth-feel of a produced tobacco product can be varied.

### SUMMARY OF THE DISCLOSURE

The present disclosure relates to a smokeless tobacco product as defined in claim 9 configured for insertion into the mouth of a user and processes for preparing a smokeless tobacco composition suitable for use in a smokeless tobacco product. The smokeless tobacco composition can incorporate specific components so as to provide a variety of smokeless tobacco products that each can exhibit a different texture, have a different mouth-feel, exhibit a different chew characteristic, or have a different dissolution quality in the mouth. In particular, the variable nature of the smokeless tobacco product can arise, at least in part, from the incorporation of a starch component, which in turn provides variable qualities to the smokeless tobacco product due to the nature and source of the starch component.

In one aspect of the present invention is provided a method for preparing a smokeless tobacco product as set out in claim 1. The starch is potato starch or modified acid or base thinned tapioca starch.

In certain embodiments, the method involves combining the specific starch material and tobacco material in aqueous solution. The starch material can be treated prior to this combining step. The method further comprises hydrating the specific starch material prior to combining it with the tobacco material. Hydrating, in certain embodiments, can comprise heating the starch in water to give a clear solution.

Various other ingredients can be added to the smokeless tobacco products according to the method provided herein. For example, in certain embodiments, the method can further comprise combining the starch material and tobacco material with one or more sweeteners. Exemplary sweeteners include, but are not limited to, fructose, sucrose, glucose, maltose, vanillin, ethylvanillin glucoside, mannose, galactose, lactose, stevia, sucralose, isomaltulose, maltodextrin, saccharin, aspartame, acesulfame K, erythritol, arabitol, ribitol, isomalt, maltitol, dulcitol, iditol, mannitol, xylitol, lactitol, sorbitol, and combinations thereof. In some embodiments, the method further may comprise combining the starch material and tobacco material with one or more additives selected from the group consisting of fillers, flavorants, salts, emulsifiers, disintegration aids, humectants, buffering agents, and mixtures thereof. Exemplary additives include, but are not limited to, oils and fillers (e.g., fondant filling). The smokeless tobacco product comprises about 1 percent or greater starch on a dry weight basis or in particular about 5% or greater starch on a dry weight basis. The smokeless tobacco product comprises about 15% or less starch on a dry weight basis.

The desired textural property selected according to the method of the present disclosure can vary. In certain embodiments, the desired textural property can be selected from the group consisting of adhesiveness, cohesiveness, density, dryness, fracturability, graininess, gumminess, hardness, heaviness, moisture absorption, moisture release, mouthcoating, roughness, slipperiness, smoothness, viscosity, wetness, and combinations thereof. The smokeless tobacco produced by way of this method can vary in form; for example, in certain embodiments, it can be in the form of a gel or in the form of a solid. In certain embodiments, the smokeless tobacco product can be dissolvable.

In another aspect of the present invention is provided a smokeless tobacco product exhibiting a specific textural property, as set out in claim 9. As indicated above, the textural property can vary and the form of the smokeless tobacco product can vary. Various additional additives can be included within the smokeless tobacco product.

### DETAILED DESCRIPTION

The present disclosure now will be described more fully hereinafter. The disclosure may be embodied in many different forms and should not be construed as limited to the aspects set forth herein; rather, these aspects are provided so that this disclosure will satisfy applicable legal requirements. As used in this specification and the claims, the singular forms "a," "an," and "the" include plural referents unless the context clearly dictates otherwise.

In various embodiments, the present invention can provide smokeless tobacco compositions suitable for oral use. The smokeless tobacco compositions generally include a tobacco material, one or more starch components, and optionally one or more additional components as described herein. In certain embodiments, the invention provides degrees of control over the organoleptic properties of smokeless tobacco products, and such control can be achieved by the selection of specific starches for inclusion therein. For example, smokeless tobacco products can exhibit specific textures, have specific mouth-feels, exhibit specific chew characteristics, and/or have specific dissolution qualities in the mouth. The specific nature of the smokeless tobacco product can arise, at least in part, from the incorporation of a particular starch component.

The products of the disclosure incorporate some form of a plant of the Nicotiana species, and most preferably, those compositions or products incorporate some form of tobacco. The selection of the Nicotiana species can vary; and in particular, the selection of the types of tobacco or tobaccos may vary. Tobaccos that can be employed include flue-cured or Virginia (e.g., K326), burley, sun-cured (e.g., Indian Kurnool and Oriental tobaccos, including Katerini, Prelip, Komotini, Xanthi and Yambol tobaccos), Maryland, dark, dark-fired, dark air cured (e.g., Passanda, Cubano, Jatin and Bezuki tobaccos), light air cured (e.g., North Wisconsin and Galpao tobaccos), Indian air cured, Red Russian and *Rustica* tobaccos, as well as various other rare or specialty tobaccos. Descriptions of various types of tobaccos, growing practices and harvesting practices are set forth in Tobacco Production, Chemistry and Technology, Davis et al. (Eds.) (1999). Various representative other types of plants from the Nicotiana species are set forth in Goodspeed, The Genus Nicotiana, (Chonica Botanica) (1954); US Pat. Nos. 4,660,577 to Sensabaugh, Jr. et al.; 5,387,416 to White et al. and 7,025,066 to Lawson et al.; US Patent Appl. Pub. Nos. 2006/0037623 to Lawrence, Jr. and 2008/0245377 to Marshall et al.. Exemplary Nicotiana species include N. tabacum, N. rustica, N. alata, N. arentsii, N. excelsior, N. forgetiana, N. glauca, N. glutinosa, N. gossei, N. kawakamii, N. knightiana, N. langsdorffi, N. otophora, N. setchelli, N. sylvestris, N. tomentosa, N. tomentosiformis, N. undulata, N. x sanderae, N. africana, N. amplexicaulis, N. benavidesii, N. bonariensis, N. debneyi, N. longiflora, N. maritina, N. megalosiphon, N. occidentalis, N. paniculata, N. plumbaginifolia, N. raimondii, N. rosulata, N. simulans, N. stocktonii, N. suaveolens, N. umbratica, N. velutina, N. wigandioides, N. acaulis, N. acuminata, N. attenuata, N. benthamiana, N. cavicola, N. clevelandii, N. cordifolia, N. corymbosa, N. fragrans, N. goodspeedii, N. linearis, N. miersii, N. nudicaulis, N. obtusifolia, N. occidentalis subsp. Hersperis, N. pauciflora, N. petunioides, N. quadrivalvis, N. repanda, N. rotundifolia, N. solanifolia, and N. spegazzinii.

Nicotiana species can be derived using genetic-modification or crossbreeding techniques (e.g., tobacco plants can be genetically engineered or crossbred to increase or decrease production of components, characteristics or attributes). See, for example, the types of genetic modifications of plants set forth in US Pat. Nos. 5,539,093 to Fitzmaurice et al.; 5,668,295 to Wahab et al.; 5,705,624 to Fitzmaurice et al.; 5,844,119 to Weigl; 6,730,832 to Dominguez et al.; 7,173,170 to Liu et al.; 7,208,659 to Colliver et al. and 7,230,160 to Benning et al.; US Patent Appl. Pub. No. 2006/0236434 to Conkling et al.; and PCT WO 2008/103935 to Nielsen et al.

For the preparation of smokeless and smokable tobacco products, it is typical for a harvested plant of the Nicotiana species to be subjected to a curing process. Descriptions of various types of curing processes for various types of tobaccos are set forth in Tobacco Production, Chemistry and Technology, Davis et al. (Eds.) (1999). Exemplary techniques and conditions for curing flue-cured tobacco are set forth in Nestor et al., Beitrage Tabakforsch. Int., 20, 467-475 (2003) and US Pat. No. 6,895,974 to Peele.
Representative techniques and conditions for air curing tobacco are set forth in US Pat. No. 7,650,892 to Groves et al.; Roton et al., Beitrage Tabakforsch. Int., 21, 305-320 (2005) and Staaf et al., Beitrage Tabakforsch. Int., 21, 321-330 (2005). Certain types of tobaccos can be subjected to alternative types of curing processes, such as fire curing or sun curing. Preferably, harvested tobaccos that are cured are then aged. As such, tobaccos used for the preparation of tobacco compositions or products most preferably incorporate components of tobaccos that have been cured and aged. Tobacco materials used in the present invention can be subjected to additional processing prior to use, such as fermentation, bleaching, and the like.

At least a portion of the plant of the Nicotiana species (e.g., at least a portion of the tobacco portion) can be employed in an immature form. That is, the plant, or at least one portion of that plant, can be harvested before reaching a stage normally regarded as ripe or mature. As such, for example, tobacco can be harvested when the tobacco plant is at the point of a sprout, is commencing leaf formation, is commencing flowering, or the like.

At least a portion of the plant of the Nicotiana species (e.g., at least a portion of the tobacco portion) can be employed in a mature form. That is, the plant, or at least one portion of that plant, can be harvested when that plant (or plant portion) reaches a point that is traditionally viewed as being ripe, over-ripe or mature. As such, for example, through the use of tobacco harvesting techniques conventionally employed by farmers, Oriental tobacco plants can be harvested, burley tobacco plants can be harvested, or Virginia tobacco leaves can be harvested or primed by stalk position.

After harvest, the plant of the Nicotiana species, or portion thereof, can be used in a green form (e.g., tobacco can be used without being subjected to any curing process). For example, tobacco in green form can be frozen, subjected to irradiation, yellowed, dried, cooked (e.g., roasted, fried or boiled), or otherwise subjected to storage or treatment for later use. Such tobacco also can be subjected to aging conditions.

The tobacco material may be cased and dried, and then ground to the desired form. For example, in some instances, the tobacco material formulation may be cased with an aqueous casing containing components such as sugars (e.g., fructose, glucose, and sucrose), humectants (e.g., glycerin and propylene glycol), flavoring ingredients (e.g., cocoa and licorice), and the like. Nonaqueous casing components may be applied to the tobacco in amounts of about 1 percent to about 15 percent, based on the dry weight of the tobacco.

The tobacco material is typically used in a form that can be described as particulate (i.e., shredded, ground, granulated, or powder form). The manner by which the tobacco material is provided in a finely divided or powder type of form may vary. Preferably, plant parts or pieces are comminuted, ground or pulverized into a particulate form using equipment and techniques for grinding, milling, or the like. Most preferably, the plant material is relatively dry in form during grinding or milling, using equipment such as hammer mills, cutter heads, air control mills, or the like. For example, tobacco parts or pieces may be ground or milled when the moisture content thereof is about 15 weight percent or less, about 10 weight percent or less, or about 5 weight percent or less. Most preferably, the tobacco material is employed in the form of parts or pieces that have an average particle size of about 50 microns or less. In one embodiment, the average particle size of the tobacco particles may be about 25 microns or less. In some instances, the tobacco particles may be sized to pass through a screen of a specific mesh size. If desired, air classification equipment may be used to ensure that small sized tobacco particles of the desired sizes, or range of sizes, may be collected. If desired, differently sized pieces of granulated tobacco may be mixed together.

At least a portion of the tobacco material employed in the tobacco composition or product has the form of an extract. Tobacco extracts can be obtained by extracting tobacco using a solvent having an aqueous character such as distilled water or tap water. As such, aqueous tobacco extracts can be provided by extracting tobacco with water, such that water insoluble pulp material is separated from the aqueous solvent and the water soluble and dispersible tobacco components dissolved and dispersed therein. The tobacco extract can be employed in a variety of forms. For example, the aqueous tobacco extract can be isolated in an essentially solvent free form, such as can be obtained as a result of the use of a spray drying or freeze drying process, or other similar types of processing steps. Alternatively, the aqueous tobacco extract can be employed in a liquid form, and as such, the content of tobacco solubles within the liquid solvent can be controlled by selection of the amount of solvent employed for extraction, concentration of the liquid tobacco extract by removal of solvent, addition of solvent to dilute the liquid tobacco extract, or the like. Exemplary techniques for extracting components of tobacco are described in US Pat. Nos. 4,144,895 to Fiore; 4,150,677 to Osborne, Jr. et al.; 4,267,847 to Reid; 4,289,147 to Wildman et al.; 4,351,346 to Brummer et al.; 4,359,059 to Brummer et al.; 4,506,682 to Muller; 4,589,428 to Keritsis; 4,605,016 to Soga et al.; 4,716,911 to Poulose et al.; 4,727,889 to Niven, Jr. et al.; 4,887,618 to Bernasek et al.; 4,941,484 to Clapp et al.; 4,967,771 to Fagg et al.; 4,986,286 to Roberts et al.; 5,005,593 to Fagg et al.; 5,018,540 to Grubbs et al.; 5,060,669 to White et al.; 5,065,775 to Fagg; 5,074,319 to White et al.; 5,099,862 to White et al.; 5,121,757 to White et al.; 5,131,414 to Fagg; 5,131,415 to Munoz et al.; 5,148,819 to Fagg; 5,197,494 to Kramer; 5,230,354 to Smith et al.; 5,234,008 to Fagg; 5,243,999 to Smith; 5,301,694 to Raymond et al.; 5,318,050 to Gonzalez-Parra et al.; 5,343,879 to Teague; 5,360,022 to Newton; 5,435,325 to Clapp et al.; 5,445,169 to Brinkley et al.; 6,131,584 to Lauterbach; 6,284,875 to Turpen et al.; 6,298,859 to Kierulff et al.; 6,772,767 to Mua et al.; 6,817,970 to Berit et al.; 6,906,172 to Bratcher et al.; 7,034,128 to Turpen et al.; 7,048,211 to Bratcher et al.; and 7,337,782 to Thompson.

The tobacco can be processed, blended, formulated, combined and mixed with other materials or ingredients (i.e., additives). See, for example, those representative components, combination of components, relative amounts of those components and ingredients relative to tobacco, and manners and methods for employing those components, set forth in US Pat. Pub. Nos. 2007/0062549 to Holton, et al. and 2007/0186941 to Holton, et al..

In certain embodiments, the tobacco material can be prepared by subjecting at least a portion of a tobacco plant (e.g., leaves, seeds, flowers, stalks, roots, or stems) to a separation process, which typically can include multiple sequential extraction steps, in order to isolate desired components of the tobacco material. Exemplary separation processes include chromatography, distillation, filtration, recrystallization, solvent-solvent partitioning, cold pressing, solvent extraction (e.g., using solvents such as water, alcohols or hydrocarbons such as heptane or hexane), or a combination thereof. The resulting isolated tobacco component can be chemically transformed prior to use in the compositions of the disclosure. Exemplary chemical transformations include hydrogenation, esterification, transesterification, isomeric conversion, acetal formation, acetal decomposition, acid/base reaction, hydrolysis, thermal treatment, enzymatic treatment, and combinations of such steps. Techniques for preparing tobacco isolates for use in the compositions of the disclosure are set forth, for example, in U.S. Application No. 12/688,294 to Coleman, III et al., filed January 15, 2010, and U.S. Application No. 12/764,613 to Coleman, III et al., filed April 21, 2010. Examples of the types of compounds that may be present in the tobacco isolate include hydrocarbons, cellulose, alcohols, aldehydes, ketones, carboxylic acids, amino acids, esters, lactones, anhydrides, carbohydrates (e.g., reducing sugars), phenols, quinones, ethers, nitriles, amines, amides, imides, plastid pigments, proteins, coenzyme-Q, pectin, starch, lignin, and lipids. Additional examples are described as natural tar diluents in PCT WO 2007/012980 to Lipowicz. The type or function of a smokeless tobacco additive prepared from a tobacco isolate will vary depending on the composition of the isolate, which can vary in part based on the extraction process employed, the portion of the tobacco plant involved, the type of chemical transformation utilized, and the like. Certain tobacco isolates can provide sugars, fillers, binders, disintegration or compressibility aids, or flavorants for the smokeless tobacco composition of the disclosure.

The relative amount of tobacco material within the smokeless tobacco composition may vary. Preferably, the amount of tobacco material within the smokeless tobacco composition is about 5 percent or greater, about 10 percent or greater, about 15 percent or greater, about 20 percent or greater, about 25 percent or greater, about 30 percent or greater, about 35 percent or greater, about 40 percent or greater, about 45 percent or greater, or about 50 percent or greater on a dry weight basis of the composition, and including all sources of tobacco including any tobacco-derived components such as binders. A typical range of tobacco material within the smokeless tobacco composition can be about 5 to about 70 dry weight percent, for example, about 10 to about 60 dry weight percent, about 15 to about 55 dry weight percent, about 20 to about 50 dry weight percent, or about 20 to about 40 weight percent.

The moisture content of the tobacco material prior to mixing with any liquid substances to form the smokeless tobacco composition may vary. Most preferably, the moisture content of the tobacco material can be about 10 weight percent or less, about 5 weight percent or less, or about 2.5 weight percent or less. The manner by which the moisture content of the tobacco material is controlled may vary. For example the tobacco material can be subjected to thermal or convection heating. As a specific example, the tobacco material may be oven-dried, in warmed air at temperatures of about 40 °C to about 95 °C for a length of time appropriate to attain the desired moisture content. For example, the tobacco material may be dried for about 12 hours to about 24 hours at about 54 °C to about 60 °C.

In some instances, prior to preparation of the tobacco material, the tobacco parts or pieces may be irradiated, or those parts and pieces may be pasteurized, or otherwise subjected to controlled heat treatment. Additionally, if desired, after preparation of all or a portion of the tobacco material, the component materials may be irradiated, or those component materials may be pasteurized, or otherwise subjected to controlled heat treatment. For example, a tobacco material may be prepared, followed by irradiation or pasteurization, and then flavoring ingredient(s) may be applied to the formulation. Representative processes are set forth in US Pat. Pub. Nos. 2009/0025738 to Mua et al. and 2009/0025739 to Brinkley et al.; and US Appl. Serial No. 12/756,656 to Beeson et al., filed April 8, 2010.

In addition to the tobacco component, the smokeless tobacco products of the present invention according to claim 9 comprise one or more starches. "Starch" as used herein may refer to pure starch from any source, modified starch, or starch derivatives. Starch is present, typically in granular form, in almost all green plants and in various types of plant tissues and organs (e.g., seeds, leaves, rhizomes, roots, tubers, shoots, fruits, grains, and stems). Starch can vary in composition, as well as in granular shape and size. Often, starch from different sources has different chemical and physical characteristics.
Pure starch comprises amylose and amylopectin, in varying percentages. The ratio of amylose to amylopectin in starch depends, in part, on the source of the starch. For example, many starches may contain from about 20 to about 25 percent amylose and from about 75 to about 80 percent amylopectin. Other starches (e.g., amylomaize) comprise about 50 percent or more amylose. Certain starches are pure amylopectin starches (i.e., "waxy starches"). Exemplary waxy starches include waxy maize, glutinous rice, and waxy potato starch. Further discussion of starch can be found, for example, in US Pat. Appl. Pub. No. 2005/0076929 to Fitzerald.

Amylose is a linear polysaccharide, comprising D-glucose units linked by α-(1→4) bonds. The number of D-glucose units in amylose can vary and may be, for example, in the range of about 200 to 22,000 (e.g., about 300 to 3,000). Although amylase may contain branch points, it is a highly linear polymer. For example, amylase can have one α-(1→6) bond per 150 - 500 glucose units. The extended conformation of amylose is considered to be responsible for starch's high viscosity, and increasing amylase concentration typically decreases gel stickiness and increases gel firmness.

Amylopectin is a highly branched polysaccharide, comprising D-glucose units linked by α-(1→4) glycosidic bonds as well as some α-(1→6) bonds. The number of D-glucose units in amylopectin can vary and may be, for example, in the range of about 1,000 to 2,000,000 (e.g., about 2,000 to 200,000). Amylopectin in starch typically has a higher molecular weight than amylose. Branching in amylopectin molecules results from α-(1→6) bonds, which typically occur every 12 to 30 glucose units. The structure of amylopectin can vary somewhat, depending on the source of the starch. For example, the degree of branching may vary. Also, some amylopectin (e.g., in potato starch) comprises phosphate groups attached to some hydroxyl groups. Amylopectin can form various types of crystallites, with different crystal packing arrangements (e.g., open hexagonal, staggered monoclinical, or a combination thereof).

According to the present disclosure, a specific starch material can be selected for inclusion in a smokeless tobacco product based on the ability of the starch material to impart a specific organoleptic property to the tobacco product. Thus, once a specific organoleptic property is identified that is desirable in a given smokeless tobacco product, an appropriate starch can be selected based on its ability to provide such a property.

Certain organoleptic properties that can be impacted by selection of starch from a particular source relate to the mouthfeel of the product. Mouthfeel includes the product's physical and chemical interaction in the mouth, evaluated from initial perception on the palate, to first bite, through mastication to swallowing and aftertaste. Certain qualities associated with mouthfeel that may be noted in the smokeless tobacco products of the invention include, but are not limited to, cohesiveness, density, dryness, fracturability, graininess, gumminess, hardness, heaviness, moisture absorption, moisture release, mouthcoating, roughness, slipperiness, smoothness, viscosity, and wetness.

In certain embodiments, mouthfeel relates to the texture of the smokeless tobacco product. Accordingly, in certain embodiments, the disclosure provides a method wherein, a specific textural property to be imparted to the product is first identified, a specific starch material that can impart the specific textural property to the product is identified; and the specific starch material is combined with a tobacco material to form a smokeless tobacco product with the desired textural property. Thus, it may be possible in certain embodiments to prepare a smokeless tobacco product having a specific textural property based on knowledge of the functional properties provided by a particular type of starch (i.e., the smokeless tobacco product is customizable or may be customized to a desired functional property or properties through correlation to an associated or identical property of the specific starch material used). In some embodiments, the smokeless tobacco product has a chewable and dissolvable quality with a mild resilience or "bounce" upon chewing that gradually leads to greater malleability during use. In some embodiments, the smokeless tobacco product has a crispy or crunchy textural quality. Some exemplary starches and textural properties associated with those starches are provided in Table 1.

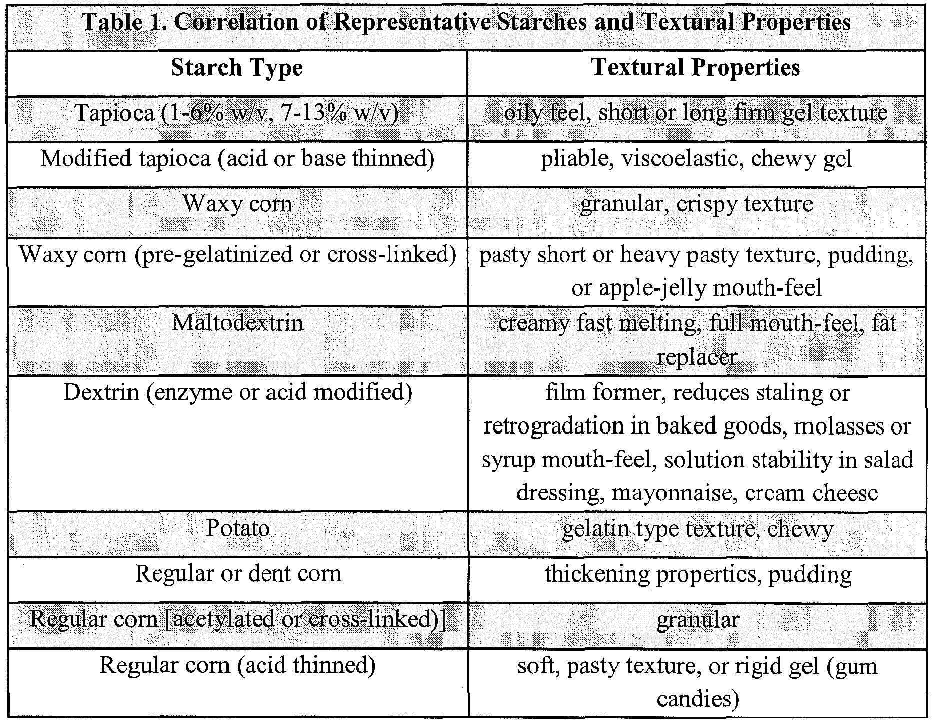

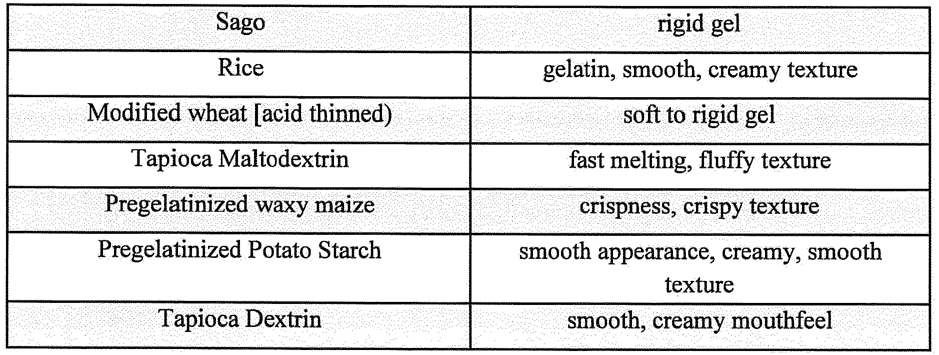

According to the present disclosure starch derived from various sources can be used. For example, major sources of starch include cereal grains (e.g., rice, wheat, and maize) and root vegetables (e.g., potatoes and cassava). Other exemplary sources of starch include acorns, arrowroot, arracacha, bananas, barley, beans (e.g., favas, lentils, mung beans, peas, chickpeas), breadfruit, buckwheat, canna, chestnuts, colacasia, katakuri, kudzu, malanga, millet, oats, oca, Polynesian arrowroot, sago, sorghum, sweet potato, quinoa, rye, tapioca, taro, tobacco, water chestnuts, and yams. In one embodiment, the starch is a tobacco-derived starch material. The use of a tobacco-derived starch material can be advantageous because such materials represent a natural product providing useful adhesive properties that enhance product cohesiveness, and also provides compatibility with the other sources of tobacco in the product from an organoleptic standpoint. See, for example, US Patent Application No. 12/957,821 to Cantrell et al., filed December 1, 2010.

Certain starches are modified starches. A modified starch has undergone one or more structural modifications, often designed to alter its high heat properties. Some starches have been developed by genetic modifications, and are considered to be "modified" starches. Other starches are obtained and subsequently modified. For example, modified starches can be starches that have been subjected to chemical reactions, such as esterification, etherification, oxidation, depolymerization (thinning) by acid catalysis or oxidation in the presence of base, bleaching, transglycosylation and depolymerization (e.g., dextrinization in the presence of a catalyst), cross-linking, enzyme treatment, acetylation, hydroxypropylation, and/or partial hydrolysis. Other starches are modified by heat treatments, such as pregelatinization, dextrinization, and/or cold water swelling processes. Certain modified starches include monostarch phosphate, distarch glycerol, distarch phosphate esterified with sodium trimetaphosphate, phosphate distarch phosphate, acetylated distarch phosphate, starch acetate esterified with acetic anhydride, starch acetate esterified with vinyl acetate, acetylated distarch adipate, acetylated distarch glycerol, hydroxypropyl starch, hydroxypropyl distarch glycerol, starch sodium octenyl succinate.

Although starch derived from different sources is similar in content (i.e., comprising primarily amylase and amylopectin), the specific characteristics of starch derived from different plants can vary significantly. For example, starch from different plants may comprise amylose and amylopectin in varying rations and with varying chain lengths and varying degrees of branching. Some starches further comprise additional components, such as phosphates, lipids, and/or proteins. Starches may exhibit varying levels of cross-linking between polymer chains. Further, starch can vary in average granule size, size distribution, and shape. For example, rice-derived starch is generally around 2 µm, maize-derived starch is generally around 12-30 µm, wheat-derived starch is generally around 30-45 µm, and potato-derived starch is generally around 50-100 µm.

These and other differences can significantly affect the physical properties of the starch. For example, they may impact the swellable potential of starch granules. For example, the higher the crystallinity, the higher the swellable potential of the starch. The crystallinity of a given starch is, in turn impacted by the ratio of amylase to amylopectin. High levels of amylase typically decrease the crystallinity of a starch, and thus, decrease the swellable potential. The crystallinity is also impacted by the size and shape of starch granules, as smaller, spherical granules are typically less crystalline and thus have less swelling potential.

The amount of starch included in the smokeless tobacco products of the present invention can vary. The amount of starch may, in certain embodiments, have an effect on the properties of the smokeless tobacco products. The smokeless tobacco products comprise about 1 percent or greater, in particular about 2 percent or greater, about 3 percent or greater, about 4 percent or greater, about 5 percent or greater, or about 10% or greater starch on a dry weight basis. The smokeless tobacco products can comprise about 50 percent or less or about 25% or less starch on a dry weight basis. Weight ranges of starch in the smokeless tobacco products according to the invention described herein include about 1% to about 15%, starch on a dry weight basis.
The smokeless tobacco products of the invention typically further comprise one or more sweeteners. The sweetener can be any sweetener or combination of sweeteners, in natural or artificial form, or as a combination of natural and artificial sweeteners. Exemplary natural sweeteners include fructose, sucrose, glucose, maltose, vanillin, ethylvanillin glucoside, mannose, galactose, lactose, stevia, and the like. Exemplary artificial sweeteners include sucralose, isomaltulose, maltodextrin, saccharin, aspartame, acesulfame K, neotame and the like. Certain exemplary sweeteners are sugar alcohols. Sugar alcohols are polyols derived from monosaccharides or disaccharides that have a partially or fully hydrogenated form. Exemplary sugar alcohols have about 4 to about 20 carbon atoms and include erythritol, arabitol, ribitol, isomalt, maltitol, dulcitol, iditol, mannitol, xylitol, lactitol, sorbitol, and combinations thereof (e.g., hydrogenated starch hydrolysates). In one embodiment, sugar (i.e., sucrose) is the primary sweetener ingredient. In other embodiments, sucralose or maltodextrin can be the primary sweetener.

In some embodiments, one or more syrups are the primary sweetener in the smokeless tobacco product. In certain embodiments, corn syrup and/or sucrose are used as sweeteners in the smokeless tobacco products of the present invention. Representative syrups that can be used include, but are not limited to, corn syrup, molasses, sugar alcohol syrups (e.g., maltitol syrup), maple syrup, agave syrup, barley syrup, birch syrup, rice syrup, coconut syrup, honey, sugar beet syrup, or sorghum syrup. When a syrup is used as a sweetener, it may also have other functions within the smokeless tobacco product. For example, a syrup can be employed in an amount sufficient to provide chewiness and retard solubilization, or otherwise provide desired flavor attributes to the smokeless tobacco composition.

When present, a representative amount of sweetener may make up about 5 percent or more, about 10 percent or more, about 15 percent or more, or about 20 percent or more of the total dry weight of the composition. In certain embodiments, the amount of sweetener within the composition will not exceed about 40 percent, about 35 percent, or about 30 percent of the total dry weight of the composition.

In some embodiments, the smokeless tobacco compositions of the invention also include at least one filler ingredient. A filler component often fulfills multiple functions, such as enhancing certain organoleptic properties such as texture and mouthfeel, enhancing cohesiveness or compressibility of the product, and the like. The filler can be organic or inorganic. Certain exemplary fillers include grains, processed grains, puffed grains, maltodextrin, dextrose, calcium carbonate, calcium phosphate, corn starch, lactose, sugar alcohols such as isomalt, maltitol, mannitol, xylitol, or sorbitol, finely divided cellulose, and the like.

In certain embodiments, a sweetener can be used as a filler component. In such cases, the smokeless tobacco product can comprise one component that acts as both sweetener and filler or can comprise one or more sweeteners in addition to the component that acts as both sweetener and filler. In some embodiments, sugar alcohols are particularly advantageous as filler components in certain products of the disclosure because such materials contribute some sweetness and do not disrupt the chewable characteristics which may be desired in the final product. In some embodiments, a fondant filler is used. Fondant fillers typically comprise sugar, corn syrup, and water. One exemplary fondant filler composition consists of sugar, corn syrup, water, albumen, algin, citric acid, vanillin, sodium propionate, and potassium sorbate. When present, a representative amount of filler, whether an organic and/or inorganic filler, may make up about 1 percent or more, about 2 percent or more, or about 5 percent or more, based on the total dry weight of the composition. Preferably, the amount of filler within the composition will not exceed about 50 percent, about 40 percent, or about 30 percent of the total dry weight of the composition.

According to the present invention, certain smokeless tobacco products further comprise one or more flavoring agents. As used herein, a "flavorant" or "flavoring agent" is any flavorful or aromatic substance capable of altering the sensory characteristics associated with the smokeless tobacco composition. Exemplary sensory characteristics that can be modified by the flavorant include, taste, mouthfeel, moistness, coolness/heat, and/or fragrance/aroma. The flavorants can be natural or synthetic, and the character of these flavors can be described as, without limitation, fresh, sweet, herbal, confectionary, floral, fruity or spice. Specific types of flavors include, but are not limited to, vanilla, coffee, chocolate, cream, mint (e.g., mint oil), spearmint, menthol, peppermint, wintergreen, lavender, cardamon, nutmeg, cinnamon, clove, cascarilla, sandalwood, honey, jasmine, ginger, anise, sage, licorice, lemon, orange, apple, peach, lime, cherry, and strawberry. Flavorants utilized in the disclosure also can include components that are considered moistening, cooling or smoothening agents, such as eucalyptus. These flavors may be provided neat (i.e., alone) or in a composite (e.g., spearmint and menthol or orange and cinnamon). In some instances, the flavorant may be provided in a spray-dried form or a liquid form. Flavorants are typically present in an amount of about 0.5 to about 10 dry weight percent, about 1 to about 6 dry weight percent, or about 2 to about 5 dry weight percent.

In some embodiments, the smokeless tobacco compositions may further comprise a salt, typically employed in an amount sufficient to provide desired sensory attributes to the smokeless tobacco composition. Exemplary salts include, but are not limited to, sodium chloride, potassium chloride, sodium citrate, potassium citrate, sodium acetate, potassium acetate, flour salt, and the like. When present, a representative amount of salt is about 0.5 dry weight percent or more, about 1.0 dry weight percent or more, or at about 1.5 dry weight percent or more, but will typically may make up about 5 percent or less of the total dry weight of the composition (e.g., about 0.5 to about 4 dry weight percent).

In certain embodiments, a humectant may be employed in the smokeless tobacco products. Exemplary humectants include, but are not limited to, glycerin, propylene glycol, and the like. Where included, the humectant is typically provided in an amount sufficient to provide desired moisture attributes to the smokeless tobacco composition. Further, in some instances, the humectant may impart desirable flow characteristics to the smokeless tobacco composition for depositing in a starch mold. When present, a representative amount of humectant is about 0.5 dry weight percent or more, about 1.0 dry weight percent or more, or about 1.5 dry weight percent or more, but the humectants, when present, will typically make up about 5 percent or less of the total dry weight of the composition (e.g., about 0.5 to about 4 dry weight percent).

A binder (or combination of binders) may be employed in certain embodiments according to the invention, in amounts sufficient to provide the desired physical attributes and physical integrity to the smokeless tobacco composition. Exemplary binders include, but are not limited to, povidone, sodium carboxymethylcellulose and other modified cellulosic types of binders, sodium alginate, xanthan gum, gum arabic, gellan gum, lecithin, polydextrose, and the like. In certain embodiments, the starch component may act as a binder, and thus, the desired physical attributes and physical integrity of the smokeless tobacco composition maybe achieved without any added binder. Where added, a representative amount of binder may make up about 5 percent or more or about 10 percent or more of the total dry weight of the composition. In certain embodiments, the binder component(s) of the composition will be present in an amount of about 15 dry weight percent or more, about 20 dry weight percent or more, or about 25 dry weight percent or more. Preferably, the total amount of binder within the composition will not exceed about 45 percent of the total dry weight of the composition. Often, the amount of binder within a desirable composition will not exceed about 40 percent or about 35 percent of the total dry weight of the composition.

The binder can include a tobacco-derived material in some embodiments, which can optionally be combined with one or more additional binder components. In certain embodiments, the binder material includes a natural gum. As used herein, a natural gum refers to polysaccharide materials of natural origin that are useful as thickening or gelling agents. When present, natural gum binder materials are typically present in an amount of at least about 15 dry weight percent, at least about 20 dry weight percent or at least about 25 dry weight percent. Representative natural gums derived from plants, which are typically water soluble to some degree, include xanthan gum, guar gum, gum arabic, ghatti gum, gum tragacanth, karaya gum, locust bean gum, gellan gum, and combinations thereof.

In certain embodiments, the compositions of the present invention can comprise pH adjusters or buffering agents. Exemplary pH adjusters and buffering agents that can be used include, but are not limited to, metal hydroxides (e.g., alkali metal hydroxides such as sodium hydroxide and potassium hydroxide) and other alkali metal buffers such as metal carbonates (e.g., potassium carbonate or sodium carbonate), or metal bicarbonates such as sodium bicarbonate, and the like. Preferred buffering agents buffer within a pH range of about 6 to about 10, and exemplary buffering agents include metal hydroxides, metal carbonates, metal bicarbonates, or mixtures thereof. Where present, the buffering agent is typically present in an amount less than about 1 percent based on the dry weight of the formulation.

Various additional additives can be included in the smokeless tobacco compositions of the present invention. The additives can be artificial, or can be obtained or derived from herbal or biological sources. Exemplary types of additives include gelling agents (e.g., fish gelatin), emulsifiers, colorants (e.g., dyes and pigments, including caramel coloring, titanium dioxide, and the like), oral care additives (e.g., thyme oil, eucalyptus oil, and zinc), preservatives (e.g., potassium sorbate and the like), disintegration or compressibility aids (e.g., microcrystalline cellulose, croscarmellose sodium, crospovidone, sodium starch glycolate, pregelatinized corn starch, and the like), antioxidants, and mixtures thereof. In some embodiments, one or more fats or oils are added. The fat may function, for example, as a processing aid and/or to optimize the appearance of the smokeless tobacco product. For example, partially hydrogenated soybean oil can be included in the composition. These and other exemplary types of additives may include those described in, for example, U.S. Pat. Pub. No. 2010/0291245 to Gao et al.

Such additives may be provided in a powder or granulated form for mixing with the tobacco material formulation, or otherwise may be provided in liquid form. Most preferably, the additive when provided in a powder or granulated form is employed in the form of parts or pieces that have an average particle size less than about 50 microns. According to some aspects, the average particle size of the additive may be about 25 microns or less. The moisture content of the additives provided in a powder or granulated form may vary. Most preferably, the moisture content of the additive provided in a powder or granulated form is about 10 weight percent or less, may be about 5 percent or less, and is often about 2.5 weight percent or less. The additive may be admixed with any component or with the particulate tobacco material in, for example, a Hobart mixer with a paddle prior to adding any liquid additives. In the event liquid additives are provided, the resultant mixture may still have a relatively low moisture content of about 10 weight percent or less, may be about 5 percent or less, and is often about 2.5 weight percent or less. The relative amounts of the various additive components within the smokeless tobacco product may vary.

The aforementioned types of additives can be employed together (e.g., as additive formulations) or separately (e.g., individual additive components can be added at different stages involved in the preparation of the final tobacco product). The relative amounts of the various components within the smokeless tobacco formulation may vary, and typically are selected so as to provide the desired sensory and performance characteristics to the tobacco product. Furthermore, the aforementioned types of additives may be encapsulated as provided in the final product or composition. Exemplary encapsulated additives are described, for example, in WO 2010/132444 A2 to Atchley.

Certain representative smokeless tobacco compositions may incorporate about 25 to about 35 percent tobacco material, about 15 to about 35 percent sweetener, about 20 to about 40 percent corn syrup, about 1 to about 15 percent starch, up to about 20 percent dextrose, up to about 5 percent oil, and up to about 10 percent filler, based on the total dry weight of the smokeless tobacco composition. The particular percentages and choice of ingredients will vary depending upon the desired flavor, texture, and other characteristics.

The manner by which the various components of the smokeless tobacco composition are combined may vary. The various components of the smokeless tobacco composition may be contacted, combined, or mixed together in conical-type blenders, mixing drums, ribbon blenders, or the like, such as a Hobart mixer. As such, the overall mixture of various components with the powdered tobacco components may be relatively uniform in nature. See also, for example, the types of methodologies set forth in U.S. Pat. Nos. 4,148,325 to Solomon et al.; 6,510,855 to Korte et al.; and 6,834,654 to Williams. In some embodiments, the ingredients forming the smokeless tobacco composition are prepared such that the mixture thereof may be used in a starch molding process for forming the smokeless tobacco product. Exemplary production processes are set forth in US Pat. Nos. 4,725,440 to Ridgway et al and 6,077,524 to Bolder et al..

In one embodiment, the process of preparing smokeless tobacco products according to the present invention comprises providing an aqueous suspension of sweetener and/or other liquid or dissolvable additives using a high shear mixer or a Hobart mixing bowl with a whipping attachment. The aqueous mixture is mixed with a tobacco material (e.g., a particulate tobacco material) and any other dry additives in a Hobart mixing bowl to form a slurry. In some embodiments, the slurry is heated to give a mixture with a desired solids content. Solids content can be evaluated, for example, by determining the Brix value of the slurry. Brix values generally are used in food and drink industries to approximate sugar content (where one degree Brix is 1 gram of sucrose in 100 grams of solution), but such values can be used generally to evaluate total dissolved solid content. Brix values can be determined, for example, by means of a refractometer or densitometer. The desired solids content of the slurry described herein can vary and can be, for example, about 40 ° Brix to about 135 ° Brix, such as about 70 ° Brix to about 90 ° Brix. Starch is separately hydrated by the addition of water to give a clear solution and the solution is admixed with the slurry. Although in some cases, it may be possible to achieve a clear starch solution at room temperature, it is often necessary to heat the starch solution. The temperature to which the starch suspension is heated can vary, and is that temperature sufficient to provide a clear starch solution.

In other embodiments, the hydrated starch solution is added prior to the addition of the tobacco material. The resulting slurry is generally heated to give a mixture with a desired solids content (e.g., between about 70 and 90 ° Brix). The slurry is then mixed with a tobacco material (e.g., a particulate tobacco material) and any other additives in a Hobart mixing bowl. The addition of the tobacco material and any other additives may occur at an elevated temperature. Exemplary additives that can be added to the slurry include oils/fats, and candy fillings (e.g., fondant filling). These additives can be added with the tobacco, or at various points prior to or following addition of the tobacco. In some cases, additives are added at select times, based on the temperature of the slurry.

According to some aspects, the smokeless tobacco composition, in the form of a slurry, may be put through a deaerating step or process prior to being received in a mold or being subjected to other processing steps, so as to reduce or eliminate air bubbles present in the slurry mixture. Air bubbles entrapped within the slurry may affect the final weight of the smokeless tobacco product, which could lead to a lack of weight uniformity between units of the final smokeless tobacco product. As such, any deaerating methods and systems may be employed for removing such air bubbles from the slurry material. For example, the slurry may be placed under reduced pressure (i.e., below atmospheric pressure) to pull the air bubbles out of the slurry mixture. In some instances, a vacuum deaerating process may be employed in which the slurry mixture is placed in a vacuum deaerator for deaerating the slurry mixture using pressure reduction. In some instances, the slurry mixture may be under vacuum for about 1 to about 10 minutes, and typically for about 3 to about 5 minutes. The deaerating step may be observed and adjusted accordingly in order to controllably remove the gaseous components from the slurry mixture.

Once the desired viscosity is achieved, the heated smokeless tobacco composition may then be deposited into a mold, such as, for example, a starch mold. While the process as further described herein is directed to forming a smokeless tobacco product using a starch mold, it is noted that other types of molds may be used in the process, such as, for example, starchless molds, plastic tray molds, metallic tray molds, neoprene tray molds, etc.

In instances involving the use of starch molds, the starch molds may be pre-dried to remove moisture content from the starch mold itself. That is, prior to receiving the slurry or viscous smokeless tobacco composition, the starch mold may be subjected to an elevated temperature to drive out moisture in the starch mold. For example, in some instances, the starch mold may initially have a moisture content of about 10-15 weight percent. Such levels of moisture could potentially have an effect on the uniformity of the resultant product. In this regard, certain moisture levels in the starch mold could potentially have a wrinkling or pruning effect on the product such that the final product has a shriveled or otherwise wrinkled appearance. As such, the starch mold may be dried at an elevated temperature to reduce the moisture content of the starch mold to between about 4 and about 10 weight percent, and preferably between about 6 and about 8 weight percent, based on the total weight of the starch mold. By taking such steps, the product may, in some instances, be more uniformly consistent in appearance. Furthermore, the starch mold may be heated to an elevated temperature prior to receiving the smokeless tobacco composition such that the starch mold itself is at an elevated temperature when receiving the smokeless tobacco composition.

The smokeless tobacco composition remains in the starch mold at an elevated temperature such as, for example, at between about 40°C to about 80°C (e.g., about 40°C or greater or about 50°C or greater), and typically at about 60°C. The smokeless tobacco composition may be held at the elevated temperature for a predetermined duration of time such as, for example, about 15 - 25 hours, so as to allow the smokeless tobacco composition to cure and solidify, while driving the moisture content of the smokeless tobacco composition to a desired final moisture level. In this regard, curing generally refers to the solidification process in which moisture loss occurs, the viscosity of the composition is raised, and chemical and physical changes begin to occur (e.g., crystallization, cross-linking, gelling, film forming, etc.). The smokeless tobacco composition is allowed to cool and thereafter removed from the starch mold. In some instances, the smokeless tobacco composition may be allowed to cool at refrigerated or below ambient temperatures. An air blower / shaker device can be used to remove starch remnants from the smokeless tobacco composition after being removed from the starch mold.

The smokeless tobacco composition is then allowed to post-cure for a time and at a temperature suitable to allow the composition to become equilibrated to a desired moisture, shape and form. The time and temperature can vary without departing from the invention and depend in part on the desired final characteristics of the product. In one embodiment, the post-cure is conducted at ambient temperature for about 20 hours or more after being removed from the mold. The resultant smokeless tobacco product may be provided in individual pieces weighing between about 0.5 grams to about 5 grams, although aspects of the present disclosure are not limited to such weights.

The curing times and temperatures of the smokeless tobacco composition can be varied as desired. In this regard, such variables may affect the final visual appearance of the smokeless tobacco product. For example, extended curing times and/or low curing temperatures may affect the final outer configuration or contours of the smokeless tobacco product. That is, the rate of drying and/or curing of the product can affect the final properties of the product. In some instances, for example, lowering the curing temperature and extending the curing time may cause the smokeless tobacco product to have a relatively smooth outer surface. In contrast, curing at higher temperatures for shorter period of times can lead to a roughened or wrinkled appearance in the product.

According to other aspects of the present disclosure, rather than using molds to prepare the smokeless tobacco product, an extrusion process may be employed in which the final smokeless tobacco product is extruded. In some instances, the smokeless tobacco composition in slurry form may be formed into a sheet and allowed to dry to a moisture content, for example, of about 15 percent to about 25 percent by weight water to form a tacky or otherwise pasty material, which is in a form capable of physical handling. The material may then be chopped or otherwise cut into smaller pieces using, for example, a mixer. The chopped material may then be extruded through an extrusion device to any shape/size desired, including shapes that may be difficult or impossible to achieve with a mold. In some instances, the extruded product may then be dried to achieve a desired moisture content. A similar type process is described, for example, in U.S. Pat. No. 3,806,617 to Smylie et al., which is incorporated herein by reference in its entirety. Further, the smokeless tobacco composition may be subjected to a co-extrusion process with another composition, which may be a smokeless tobacco composition or any other non-smokeless tobacco composition.

Shapes such as, for example, rods and cubes can be formed by first extruding the material through a die having the desired cross-section (e.g., round or square) and then optionally cutting the extruded material into desired lengths. Techniques and equipment for extruding tobacco materials are set forth in US Pat. Nos. 3,098,492 to Wursburg; 4,874,000 to Tamol et al.; 4,880,018 to Graves et al.; 4,989,620 to Keritsis et al.; 5,072,744 to Luke et al.; 5,829,453 to White et al.; and 6,182,670 to White et al. Exemplary extrusion equipment suitable for use include food or gum extruders, or industrial pasta extruders such as Model TP 200/300 available from Emiliomiti, LLC of Italy. In some instances, a single machine may be capable of achieving multiple steps of the processes described herein, such as, for example, kneader systems available from Buss AG.

The smokeless tobacco product can be dried or moistened to reach the final desired moisture level. The moisture content of the smokeless tobacco product prior to use by a consumer can vary. Typically, the moisture content of the smokeless tobacco product, as present within a single unit of product prior to insertion into the mouth of the user, is within the range of about 5 to about 20 weight percent, often about 8 to about 15 weight percent, more often about 10 to about 13 weight percent, based on the total weight of the product unit, but may vary depending upon the specific form of the smokeless tobacco product.

The acidity or alkalinity of the smokeless tobacco product, which is often characterized in terms of pH, can vary. Typically, the pH of that formulation is about 6.5 or greater, and preferably about 7.5 or greater. Typically, the pH of that formulation will not exceed about 9.5, and often will not exceed about 9.0. A representative tobacco formulation exhibits a pH of about 6.8 to about 8.8 (e.g., about 7.4 to about 8.2). A representative technique for determining the pH of a smokeless tobacco formulation involves dispersing 5 g of that formulation in 100 ml of high performance liquid chromatography water, and measuring the pH of the resulting suspension/solution (e.g., with a pH meter).

The smokeless tobacco products of the invention can take any of a number of physical forms. Certain smokeless tobacco products are in the form of gels. The gel can be a soft gel or a hard gel. Certain smokeless tobacco products are in the form of pastilles. As used herein, the term "pastille" refers to a dissolvable oral product made by solidifying a liquid or gel composition so that the final product is a somewhat hardened solid gel. The rigidity of the gel is highly variable. Certain products of the invention are in the form of solids. Certain products can exhibit, for example, one or more of the following characteristics: crispy, granular, chewy, syrupy, pasty, fluffy, smooth, and/or creamy. In certain embodiments, the desired textural property can be selected from the group consisting of adhesiveness, cohesiveness, density, dryness, fracturability, graininess, gumminess, hardness, heaviness, moisture absorption, moisture release, mouthcoating, roughness, slipperiness, smoothness, viscosity, wetness, and combinations thereof.

The compositions of the present invention may be dissolvable. As used herein, the terms "dissolve," "dissolving," and "dissolvable" refer to compositions having aqueous-soluble components that interact with moisture in the oral cavity and enter into solution, thereby causing gradual consumption of the product. According to one aspect, the dissolvable smokeless tobacco product is capable of lasting in the user's mouth for a given period of time until it completely dissolves. Dissolution rates of the present smokeless tobacco products can vary over a wide range, from about 1 minute or less to about 60 minutes. For example, fast release compositions typically dissolve and/or release the active component in about 2 minutes or less, often about 1 minute or less (e.g., about 50 seconds or less, about 40 seconds or less, about 30 seconds or less, or about 20 seconds or less). Dissolution can occur by any means, such as melting, mechanical disruption (e.g., chewing), enzymatic or other chemical degradation, or by disruption of the interaction between the components of the product. In some embodiments, the products can be meltable as discussed, for example, in US App. No. 12/854,342 to Cantrell et al., filed Aug. 11, 2010. In other embodiments, the compositions do not dissolve during the smokeless tobacco product's residence in the user's mouth.

In certain embodiments, the products of the disclosure are characterized by sufficient cohesiveness to withstand light chewing action in the oral cavity without rapidly disintegrating. Certain products of the disclosure typically do not exhibit a highly deformable chewing quality as found in conventional chewing gum. In certain embodiments, the product may temporarily adhere to a part of the oral mucosa.

The smokeless tobacco product can be provided in any suitable predetermined shape or form. For example, in some embodiments, the smokeless tobacco product is provided in the form having a general shape of a pill, pellet, tablet, coin, bead, ovoid, obloid, cube, film, flake, stick, foam, gel, or the like. In some embodiments, the shape is determined by the shape of the mold in which the product is formed. Individual compositions can be sized such that they fit entirely in the user's mouth, or such that they fit only partially in the mouth. Thus, the preferred dimensions can vary.

According to some embodiments, the smokeless tobacco composition may be coated with a coating substance after being removed from the starch mold and prior to drying. For example, a glazing or anti-sticking coating substance, such as, for example, CAPOL 410 (available from Centerchem, Inc.), may be applied to the smokeless tobacco composition to provide free-flowing properties. Outer coatings can also help to improve storage stability of the smokeless tobacco products of the present disclosure as well as improve the packaging process by reducing friability and dusting. Devices for providing outer coating layers to the products of the present disclosure include pan coaters and spray coaters, and particularly include the coating devices available as CompuLab 24, CompuLab 36, Accela-Cota 48 and Accela-Cota 60 from Thomas Engineering.

An exemplary outer coating comprises a film-forming polymer, such as a cellulosic polymer, an optional plasticizer, and optional flavorants, colorants, salts, sweeteners or other additives of the types set forth herein. The coating compositions are usually aqueous in nature and can be applied using any pellet or tablet coating technique known in the art, such as pan coating. Exemplary film-forming polymers include cellulosic polymers such as methylcellulose, hydroxypropyl cellulose (HPC), hydroxypropyl methylcellulose (HPMC), hydroxyethyl cellulose, and carboxy methylcellulose. Exemplary plasticizers include aqueous solutions or emulsions of glyceryl monostearate and triethyl citrate. Exemplary coating compositions and methods of application are described in U.S. Application No. 12/876,785 to Hunt et al.; filed September 7, 2010.

Although the foregoing description focuses on compositions that are uniform throughout each product unit, products can also be formed with multiple different formulations having different properties in the same product unit. For example, two different compositions can be deposited in a single mold to produce a layered product. Still further, two different compositions could be co-extruded to form a product with different characteristics across its cross-section. Such a process could be used to provide a product with two different compositions featuring different dissolution rates such that a first portion of the product dissolves at a first rate (e.g., a faster rate) and a second portion dissolves at a second, slower rate.

According to some aspects, the tobacco particulate component of the pastille composition may be replaced with other suitable botanical particulate components such as, for example, tea particulates, coffee particulates, herbal particulates, spice particulates and/or combinations thereof. The particulates may be typically provided in a powder form, which may be extracted from an appropriate botanical source.

Products of the present disclosure can be packaged and stored in any suitable packaging. See, for example, the various types of containers for smokeless types of products that are set forth in US Pat. Nos. 7,014,039 to Henson et al.; 7,537,110 to Kutsch et al.; 7,584,843 to Kutsch et al.; D592,956 to Thiellier and D594,154 to Patel et al.; US Pat. Pub. Nos. 2008/0173317 to Robinson et al.; 2009/0014343 to Clark et al.; 2009/0014450 to Bjorkholm; 2009/0250360 to Bellamah et al.; 2009/0266837 to Gelardi et al.; 2009/0223989 to Gelardi; 2009/0230003 to Thiellier; 2010/0084424 to Gelardi; and 2010/0133140 to Bailey et al; and US Pat. Appl. Serial Nos. 29/342,212, filed August 20, 2009, to Bailey et al.; 12/425,180, filed April 16, 2009, to Bailey et al.; 12/685,819, filed January 12, 2010, to Bailey et al.; and 12/814,015, filed June 11, 2010, to Gelardi et al..

### EXPERIMENTAL

The following examples are provided to illustrate further aspects associated with the present disclosure, but should not be construed as limiting the scope thereof. Unless otherwise noted, all parts and percentages are by dry weight.

### Reference Example - Firm Pastille

A smokeless tobacco composition suitable for use as a smokeless tobacco product for oral use is provided in the following manner.

A suspension is prepared by combining sugar (360.00 g), 42DE corn syrup (480.89 g) and water (192.80 g). The suspension is heated to 110°C (230°F) until the solids content reached 72° Brix. Tobacco (360.00 g) is then slowly added to the suspension. Additional water (185 g) is added during addition of the tobacco to ensure that the mixture is not too thick. Separately, a hydrated starch is prepared by adding water (144 g) to potato starch (Perfectagel MPT, 144.01 g) and stirring and heating the mixture to 88-93°C (190-200°F) to give a clear solution. The hydrated starch is quickly added to the sugar/tobacco suspension. The resulting mixture is deposited into Nu Mould™ starch molding trays and dried in an oven at 54°C (130°F) for 48 hours or until a solids content of about 82 ° Brix is obtained. The process gives small dried gel disc-shaped products comprising 35% tobacco and water activity A_{w} of 0.44.

### Reference Example - Soft Pastille

A smokeless tobacco composition suitable for use as a smokeless tobacco product for oral use is provided in the following manner.

A suspension is prepared by combining sugar (150.00 g), 42DE corn syrup (210.02 g), dextrose (66.01 g), and water (108.10 g). Dextrose is incorporated to maintain good fluidity of the suspension. The suspension is heated to 110°C (230°F) until the solids content reached 72° Brix. Tobacco (180.00 g) is then slowly added to the suspension. Separately, a hydrated starch is prepared by adding water to potato starch (Perfectagel MPT, 72.01 g) and stirring and heating the mixture to 88 - 93 °C (190 - 200 °F) to give a clear solution. The hydrated starch is quickly added to the sugar/tobacco suspension. The resulting mixture is deposited into Nu Mould™ starch molding trays and dried in an oven at 54 °C (130 °F) for 48 hours or until a solids content of about 82 ° Brix is obtained. The process gives medium-sized dried gel disc-shaped products comprising 15% tobacco and water activity A_{w} of 0.45. These products are slightly softer and more flexible than those of Example 1. These products also include a higher amount of tobacco, but as shown by the A_{w} value, this did not affect the water activity of the gel.

### Reference Example - Crisp Chew

A smokeless tobacco composition suitable for use as a smokeless tobacco product for oral use is provided in the following manner.

A suspension is prepared by combining sugar (157.14 g), 42DE corn syrup (157.14 g), and water (45.28 g). Separately, a hydrated starch is prepared by adding water (45.23 g) to starch (Amylogum™ EST, 9.52 g) and stirring the mixture without heating to give a clear solution. The hydrated starch is quickly added to the sugar suspension and the mixture is stirred and heated at 122 °C (251 °F) until a solids content of 85-88° Brix is obtained. The resulting mixture is transferred to a Hobart bowl with a paddle attachment and stirred. When the temperature of the mixture drops to about 77 °C (170 °F), pre-melted partially hydrogenated soybean oil (9.52 g) is added and mixing is continued. When the temperature of the mixture drops to about 71 °C (160 °F), Redi Fondant filling (9.52 g) and tobacco (131.05 g) is added and the mixture is stirred for three minutes. The resulting sticky dough-like material is spread onto parchment paper, rolled flat, and left overnight. The material is cut and wrapped to give a firm, slightly rough and crisp chew comprising 23% tobacco, 2% soybean oil, and water activity A_{w} of 0.46.

### Reference Example - Hard Chew

A smokeless tobacco composition suitable for use as a smokeless tobacco product for oral use is provided in the following manner.

A suspension is prepared by combining sugar (87.14 g), 42DE corn syrup (151.11 g), dextrose (87.04 g), and water (45.08 g). Separately, a hydrated starch is prepared by adding water (45.15 g) to starch (Amylogum EST, 9.16 g) and stirring the mixture without heating to give a clear solution. The hydrated starch is quickly added to the sugar suspension and the mixture is stirred and heated at 122 °C (251 °F) until a solids content of 85-88° Brix is obtained. The resulting mixture is transferred to a Hobart bowl with a paddle attachment and stirred. When the temperature of the mixture drops to about 77°C (170°F), pre-melted partially hydrogenated soybean oil (9.12 g) is added and mixing is continued. When the temperature of the mixture drops to about 71°C (160°F), Redi Fondant filling (9.52 g) and tobacco (166.41 g) is added and the mixture is stirred for three minutes. The resulting sticky dough-like material is spread onto parchment paper, rolled flat, and left overnight. The material is cut and wrapped to give a hard and rough chew, comprising 35% tobacco, 2% soybean oil, and water activity A_{w} of 0.41. This product is similar in texture to that of Experiment 3; however, the higher tobacco content of this product results in a noticeably rougher appearance.

### Reference Example - Soft Chew

A smokeless tobacco composition suitable for use as a smokeless tobacco product for oral use is provided in the following manner.

A suspension is prepared by combining sugar (85.71 g), 42DE corn syrup (148.87 g), dextrose (85.71 g), and water (43.00 g). Separately, a hydrated starch is prepared by adding water (42.71 g) to starch (Amylogum™ EST, 9.10 g) and stirring the mixture without heating to give a clear solution. The hydrated starch is quickly added to the sugar suspension and the mixture is stirred and heated at 122°C (251°F) until a solids content of 85-88° Brix is obtained. The resulting mixture is transferred to a Hobart bowl with a paddle attachment and stirred. When the temperature of the mixture drops to about 77°C (170°F) pre-melted partially hydrogenated soybean oil (18.05 g) is added and mixing is continued. The amount of soybean oil is higher than that in Example 4, in an attempt to improve the appearance of the product. When the temperature of the mixture drops to about 71 °C (160°F), Redi Fondant filling (9.02 g) and tobacco (157.89 g) is added and the mixture is stirred for three minutes. The resulting sticky but fluid dough-like material is spread onto parchment paper, rolled flat, and left overnight. The material is cut and wrapped to give a soft, smooth, and flexible chew, comprising 35% tobacco, 4% soybean oil, and water activity A_{w} of 0.48. The product exhibits a smooth, shiny appearance and some flexibility.

### Example - Soft, Elastic Chew

A smokeless tobacco composition suitable for use as a smokeless tobacco product for oral use is provided in the following manner.

A suspension is prepared by combining sugar (85.71 g), 42DE corn syrup (148.87 g), dextrose (85.71 g), and water (43.00 g). Separately, a hydrated starch is prepared by adding water (42.71 g) to starch (Amylogum CLS, 9.02 g) and stirring the mixture without heating to give a clear solution. Amylogum CLS is used in place of Amylogum EST to improve the elasticity of the chew. The hydrated starch is quickly added to the sugar suspension and the mixture is stirred and heated at 122°C (251°F) until a solids content of 85-88° Brix is obtained. The resulting mixture is transferred to a Hobart bowl with a paddle attachment and stirred. When the temperature of the mixture drops to about 77°C (170°F), pre-melted partially hydrogenated soybean oil (18.05 g) is added and mixing is continued. When the temperature of the mixture drops to about 71°C (160°F), Redi Fondant filling (9.02 g) and tobacco (157.89 g) is added and the mixture is stirred for three minutes. The resulting material is spread onto parchment paper, rolled flat, and left overnight. The material is cut and wrapped to give a soft, extremely elastic chew, comprising 35% tobacco and water activity A_{w} of 0.43.

## Claims

1. A method for preparing a smokeless tobacco product, comprising:
identifying a starch material that provides a particular textural property;
combining the starch material with a tobacco extract; and shaping the combination into:
(a) smokeless tobacco product units with gelatin type, chewy textural properties, wherein the starch material is potato starch; or
(b) smokeless tobacco product units with pliable, viscoelastic, chewy gel textural properties, wherein the starch material is modified tapioca starch, wherein modified tapioca starch is acid or base thinned tapioca starch,
wherein the smokeless tobacco product comprises about 1 percent to about 15 percent of the starch material on a dry weight basis;
and wherein the method comprises hydrating the starch material prior to combining it with the tobacco extract.

2. The method of claim 1, wherein the combining step is conducted in aqueous solution.

3. The method of claim 1, wherein the hydrating step comprises heating the starch material in water to give a clear solution.

4. The method of claim 1, wherein the method further comprises combining the starch material and tobacco extract with one or more sweeteners, and, in particular, wherein the sweetener is selected from the group consisting of fructose, sucrose, glucose, maltose, vanillin, ethylvanillin glucoside, mannose, galactose, lactose, stevia, sucralose, isomaltulose, maltodextrin, saccharin, aspartame, acesulfame K, erythritol, arabitol, ribitol, isomalt, maltitol, dulcitol, iditol, mannitol, xylitol, lactitol, sorbitol, and combinations thereof.

5. The method of claim 1, wherein the method further comprises combining the starch material and tobacco extract with one or more additional components selected from the group consisting of fillers, flavorants, salts, emulsifiers, disintegration aids, humectants, buffering agents, and mixtures thereof.

6. The method of claim 5, wherein the additional component is an oil or a filler.

7. The method of claim 1, wherein the smokeless tobacco product comprises about 5 percent or more starch material on a dry weight basis.

8. The method of claim 1, wherein the smokeless tobacco product is dissolvable.

9. A smokeless tobacco product comprising:
a tobacco extract; and a content of a starch material
(a) the starch material being selected from potato starch, wherein the smokeless tobacco product is a solid with gelatin type, chewy textural properties; or
(b) the starch material being selected from modified tapioca starch, wherein modified tapioca starch is acid or base thinned tapioca starch, wherein the smokeless tobacco product is a solid with pliable, viscoelastic, chewy gel textural properties;
wherein the smokeless tobacco product comprises about 1 percent to about 15 percent of the starch material on a dry weight basis.

10. The smokeless tobacco product of claim 9, wherein the smokeless tobacco product further comprises one or more sweeteners, and in particular, wherein the sweetener is selected from the group consisting of fructose, sucrose, glucose, maltose, vanillin, ethylvanillin glucoside, mannose, galactose, lactose, stevia, sucralose, isomaltulose, maltodextrin, saccharin, aspartame, acesulfame K, erythritol, arabitol, ribitol, isomalt, maltitol, dulcitol, iditol, mannitol, xylitol, lactitol, sorbitol, and combinations thereof.

11. The smokeless tobacco product of claim 9, wherein the smokeless tobacco product further comprises one or more additional components selected from the group consisting of fillers, flavorants, emulsifiers, salts, disintergration aids, humectants, buffering agents, and mixtures thereof.

12. The smokeless tobacco product of claim 11, wherein the additional component is an oil or a filler.

13. The smokeless tobacco product of claim 9, wherein the smokeless tobacco product is dissolvable.

## Patentansprüche

1. Verfahren zur Herstellung eines rauchlosen Tabakprodukts, umfassend:
Identifizieren eines Stärkematerials, welches eine besondere Textureigenschaft bereitstellt;
Kombinieren des Stärkematerials mit einem Tabakextrakt; und Formen der Kombination zu:
(a) rauchlosen Tabakprodukteinheiten mit gelatineartigen, kaubaren Textureigenschaften, wobei das Stärkematerial Kartoffelstärke ist; oder zu
(b) rauchlosen Tabakprodukteinheiten mit nachgiebigen, viskoelastischen, kaubaren Geltextureigenschaften, wobei das Stärkematerial eine modifizierte Tapiokastärke ist, wobei die modifizierte Tapiokastärke eine mit Säure oder Base verdünnte Tapiokastärke ist,
wobei das rauchlose Tabakprodukt etwa 1 Prozent bis etwa 15 Prozent des Stärkematerials umfasst, bezogen auf ein Trockengewicht;
und wobei das Verfahren ein Hydratisieren des Stärkematerials vor dessen Kombination mit dem Tabakextrakt umfasst.

2. Verfahren nach Anspruch 1, wobei der Schritt des Kombinierens in einer wässrigen Lösung durchgeführt wird.

3. Verfahren nach Anspruch 1, wobei der Schritt des Hydratisierens ein Erhitzen des Stärkematerials in Wasser umfasst, um eine klare Lösung zu erhalten.

4. Verfahren nach Anspruch 1, wobei das Verfahren ferner umfasst: Kombinieren des Stärkematerials und des Tabakextrakts mit einem oder mehreren Süßungsmitteln und wobei insbesondere das Süßungsmittel ausgewählt ist aus der Gruppe bestehend aus Fructose, Saccharose, Glucose, Maltose, Vanillin, Ethylvanillinglucosid, Mannose, Galactose, Lactose, Stevia, Sucralose, Isomaltulose, Maltodextrin, Saccharin, Aspartam, Acesulfam K, Erythritol, Arabitol, Ribitol, Isomalt, Maltitol, Dulcitol, Iditol, Mannitol, Xylitol, Lactitol, Sorbitol und Kombination hiervon.

5. Verfahren nach Anspruch 1, wobei das Verfahren ferner umfasst: Kombinieren des Stärkematerials und des Tabakextrakts mit einer oder mehreren zusätzlichen Komponenten, ausgewählt aus der Gruppe bestehend aus Füllstoffen, Aromastoffen, Salzen, Emulgatoren, Zerfallshilfen, Feuchthaltemitteln, Pufferagenzien und Mischungen hiervon.

6. Verfahren nach Anspruch 5, wobei die zusätzliche Komponente ein Öl oder ein Füllstoff ist.

7. Verfahren nach Anspruch 1, wobei das rauchlose Tabakprodukt etwa 5 Prozent oder mehr an Stärkematerial umfasst, bezogen auf ein Trockengewicht.

8. Verfahren nach Anspruch 1, wobei das rauchlose Tabakprodukt löslich ist.

9. Rauchloses Tabakprodukt, umfassend:
einen Tabakextrakt; und einen Gehalt an Stärkematerial, wobei
(a) das Stärkematerial ausgewählt ist aus Kartoffelstärke, wobei das rauchlose Tabakprodukt ein Feststoff mit gelatineartigen, kaubaren Textureigenschaften ist; oder wobei
(b) das Stärkematerial ausgewählt ist aus einer modifizierten Tapiokastärke, wobei die modifizierte Tapiokastärke eine mit Säure oder Base verdünnte Tapiokastärke ist, wobei das rauchlose Tabakprodukt ein Feststoff mit nachgiebigen, viskoelastischen, kaubaren Geltextureigenschaften ist,
wobei das rauchlose Tabakprodukt etwa 1 Prozent bis etwa 15 Prozent des Stärkematerials umfasst, bezogen auf ein Trockengewicht.

10. Rauchloses Tabakprodukt nach Anspruch 9, wobei das rauchlose Tabakprodukt ferner ein oder mehrere Süßungsmittel umfasst, und wobei insbesondere das Süßungsmittel ausgewählt ist aus der Gruppe bestehend aus Fructose, Saccharose, Glucose, Maltose, Vanillin, Ethylvanillinglucosid, Mannose, Galactose, Lactose, Stevia, Sucralose, Isomaltulose, Maltodextrin, Saccharin, Aspartam, Acesulfam K, Erythritol, Arabitol, Ribitol, Isomalt, Maltitol, Dulcitol, Iditol, Mannitol, Xylitol, Lactitol, Sorbitol und Kombination hiervon.

11. Rauchloses Tabakprodukt nach Anspruch 9, wobei das rauchlose Tabakprodukt ferner eine oder mehrere zusätzliche Komponenten umfasst, ausgewählt aus der Gruppe bestehend aus Füllstoffen, Aromastoffen, Emulgatoren, Salzen, Zerfallshilfen, Feuchthaltemitteln, Pufferagenzien und Mischungen hiervon.

12. Rauchloses Tabakprodukt nach Anspruch 11, wobei die zusätzliche Komponente ein Öl oder ein Füllstoff ist.

13. Rauchloses Tabakprodukt nach Anspruch 9, wobei das rauchlose Tabakprodukt löslich ist.

## Revendications

1. Méthode de préparation d'un produit de tabac sans fumée, comprenant :
l'identification d'un matériau d'amidon qui fournit une propriété texturale particulière ;
la combinaison du matériau d'amidon avec un extrait de tabac ; et la mise en forme de la combinaison en :
(a) unités de produit de tabac sans fumée avec des propriétés texturales moelleuses de type gélatine, dans lesquelles le matériau d'amidon est de l'amidon de pomme de terre ; ou
(b) des unités de produit de tabac sans fumée avec des propriétés texturales de gel pliable, viscoélastique et moelleux, dans lesquelles le matériau d'amidon est de l'amidon de tapioca modifié, dans lesquelles l'amidon de tapioca modifié est de l'amidon de tapioca fluidifié par un acide ou une base,
dans laquelle le produit de tabac sans fumée comprend environ 1 pour cent à environ 15 pour cent du matériau d'amidon sur une base de poids sec ;
et dans laquelle la méthode comprend l'hydratation du matériau d'amidon avant de le combiner avec l'extrait de tabac.

2. Méthode selon la revendication 1, dans laquelle l'étape de combinaison est réalisée dans une solution aqueuse.

3. Méthode selon la revendication 1, dans laquelle l'étape d'hydratation comprend le chauffage du matériau d'amidon dans de l'eau pour donner une solution limpide.

4. Méthode selon la revendication 1, dans laquelle la méthode comprend en outre la combinaison du matériau d'amidon et de l'extrait de tabac avec un ou plusieurs édulcorants, et, en particulier, dans laquelle l'édulcorant est sélectionné dans le groupe consistant en du fructose, du sucrose, du glucose, du maltose, de la vanilline, de l'éthylvanilline glucoside, du mannose, du galactose, du lactose, de la stévia, du sucralose, de l'isomaltulose, de la maltodextrine, de la saccarine, de l'aspartame, de l'acésulfame K, de l'érythritol, de l'arabitol, du ribitol, de l'isomalt, du maltitol, du dulcitol, de l'iditol, du mannitol, du xylitol, du lactitol, du sorbitol, et des combinaisons de ceux-ci.

5. Méthode selon la revendication 1, dans laquelle la méthode comprend en outre la combinaison du matériau d'amidon et de l'extrait de tabac avec un ou plusieurs composants supplémentaires sélectionnés dans le groupe consistant en des charges, des arômes, des sels, des émulsifiants, des agents favorisant la désintégration, des agents humidifiants, des agents tampons, et des mélanges de ceux-ci.

6. Méthode selon la revendication 5, dans laquelle le composant supplémentaire est une huile ou une charge.

7. Méthode selon la revendication 1, dans laquelle le produit de tabac sans fumée comprend environ 5 pour cent ou plus du matériau d'amidon sur une base de poids sec.

8. Méthode selon la revendication 1, dans laquelle le produit de tabac sans fumée est soluble.

9. Produit de tabac sans fumée, comprenant :
un extrait de tabac ; et un contenu d'un matériau d'amidon,
(a) le matériau d'amidon étant sélectionné parmi de l'amidon de pomme de terre, dans lequel le produit de tabac sans fumée est un corps solide avec des propriétés texturales moelleuse de type gélatine ; ou
(b) le matériau d'amidon étant sélectionné parmi de l'amidon de tapioca modifié, dans lequel l'amidon de tapioca modifié est de l'amidon de tapioca fluidifié par un acide ou une base,
dans lequel le produit de tabac sans fumée est un corps solide avec des propriétés texturales de gel pliable, viscoélastique et moelleux ;
dans lequel le produit de tabac sans fumée comprend environ 1 pour cent à environ 15 pour cent du matériau d'amidon sur une base de poids sec.

10. Produit de tabac sans fumée selon la revendication 9, dans lequel le produit de tabac sans fumée comprend un ou plusieurs édulcorants, et, en particulier, dans lequel l'édulcorant est sélectionné dans le groupe consistant en du fructose, du sucrose, du glucose, du maltose, de la vanilline, de l'éthylvanilline glucoside, du mannose, du galactose, du lactose, de la stévia, du sucralose, de l'isomaltulose, de la maltodextrine, de la saccarine, de l'aspartame, de l'acésulfame K, de l'érythritol, de l'arabitol, du ribitol, de l'isomalt, du maltitol, du dulcitol, de l'iditol, du mannitol, du xylitol, du lactitol, du sorbitol, et des combinaisons de ceux-ci.

11. Produit de tabac sans fumée selon la revendication 9, dans lequel le produit de tabac sans fumée comprend en outre un ou plusieurs composants supplémentaires sélectionnés dans le groupe consistant en des charges, des arômes, des émulsifiants, des sels, des agents favorisant la désintégration, des agents humidifiants, des agents tampons, et des mélanges de ceux-ci.

12. Produit de tabac sans fumée selon la revendication 11, dans lequel le composant supplémentaire est une huile ou une charge.

13. Produit de tabac sans fumée selon la revendication 9, dans lequel le produit de tabac sans fumée est soluble.
